(19) Europäisches Patentamt
European Patent Office
Office européen des brevets

(11) **EP 3 327 154 B1**

(12) **EUROPEAN PATENT SPECIFICATION**

(45) Date of publication and mention
of the grant of the patent:
**17.07.2019 Bulletin 2019/29**

(21) Application number: **15898741.2**

(22) Date of filing: **09.09.2015**

(51) Int Cl.:
**C22B 34/12** *(2006.01)*        **C22B 5/04** *(2006.01)*

(86) International application number:
**PCT/CN2015/089228**

(87) International publication number:
**WO 2017/012185 (26.01.2017 Gazette 2017/04)**

(54) **METHOD FOR PREPARING TITANIUM OR TITANIUM ALUMINUM ALLOY AND BYPRODUCT-TITANIUM-FREE CRYOLITE THROUGH TWO-STAGE ALUMINOTHERMIC REDUCTION**

VERFAHREN ZUR HERSTELLUNG VON TITAN- ODER ALUMINIUMLEGIERUNG DURCH ZWEISTUFIGE ALUMINOTHERMISCHE REDUKTION UND ZUM ERHALTEN VON TITANFREIEM KRYOLITH ALS NEBENPRODUKT

PROCÉDÉ DE PRÉPARATION D'UN ALLIAGE DE TITANE OU DE TITANE ET D'ALUMINIUM ET D'UN SOUS-PRODUIT À BASE DE CRYOLITHE SANS TITANE PAR RÉDUCTION ALUMINOTHERMIQUE À DEUX ÉTAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2015 CN 201510420032**

(43) Date of publication of application:
**30.05.2018 Bulletin 2018/22**

(73) Proprietors:
• **Northeastern University**
  **Shenyang, Liaoning 110819 (CN)**
• **Shenyang Beiye Metallurgical Technology Co., Ltd.**
  **Liaoning 110819 (CN)**

(72) Inventors:
• **FENG, Naixiang**
  **Shenyang**
  **Liaoning 110819 (CN)**
• **ZHAO, Kun**
  **Shenyang**
  **Liaoning 110015 (CN)**
• **WANG, Yaowu**
  **Shenyang**
  **Liaoning 110819 (CN)**
• **PENG, Jianping**
  **Shenyang**
  **Liaoning 110819 (CN)**
• **DI, Yuezhong**
  **Shenyang**
  **Liaoning 110819 (CN)**

(74) Representative: **Office Kirkpatrick**
**Avenue Wolfers, 32**
**1310 La Hulpe (BE)**

(56) References cited:
**CN-A- 101 967 531        CN-A- 102 181 670**
**CN-A- 102 534 263        CN-A- 102 560 153**
**CN-A- 102 936 672        JP-A- H03 243 732**
**US-A- 4 668 286          US-A- 5 397 375**
**US-A- 5 482 691**

## Description

### Technical Field

The present invention belongs to the technical field of metallurgy and particularly relates to a method for producing titanium and titanium aluminum alloys through two-stage aluminothermic reduction and obtaining titanium-free cryolite as byproducts.

### Background

Titanium is a light rare metal material and is widely applied in the technical fields of aviation, aerospace and chemical engineering. At present, titanium is produced by a method for reducing titanium tetrachloride ($TiCl_4$) with magnesium at high temperature, and the titanium produced by the method is spongy. The titanium can also be produced by a method for reducing titanium tetrachloride($TiCl_4$) with sodium at high temperature. The method for producing titanium by reducing the titanium tetrachloride($TiCl_4$) with the magnesium or the sodium is high in cost. In addition, $Cl_2$ is a raw material during production of the $TiCl_4$, and the byproduct in reduction process is chloride. Since $Cl_2$ and the chloride are strong corrosive to equipment, the operation conditions are complicated and extreme. Therefore, people also continuously explore other smelting methods for producing titanium, such as fused salt electrolysis of $TiCl_4$, and electro-deoxidization fused salt electrolysis of $TiO_2$ which is used as a negative pole, but the methods are still in a laboratory research stage and do not succeed in the industry. Additionally, methods for producing the titanium by using sodium fluotitanate or potassium fluotitanate or titanium trifluoride as a raw material and using Al-Zn, Al-Mg, and Al-Zn-Mg alloys as well as pure Al, pure Mg and pure Na as reducing agents, also exist (see US Pub, NO:US 2010/0173170A1, CN102534263A, CN102560153A and CN102534260A). For example, US 4,668,286 discloses a two steps reduction process to produce metallic titanium, wherein metal fluotitanate is first contacted with two disctinct molten alloys, to form a molten phase which is then further reduced by contacting a third molten alloy and heating to the reaction temperature. US 5,397,375 discloses a method to produce metallic titanium by reducing a titanium-fluoride compound with metallic aluminium in a molten fluoroaluminate. CN102936672 discloses a method to manufacture rolls of an alloy of aluminium and titanium, by heating aluminium and titanate fluoride to a molten state and stirring rapidly under Argon. According to the methods of producing titanium, the purity of titanium can be 70.7% or above, and the maximum purity can be 99.5%.

The reduction reactions are all performed at the temperature of 900-1000 °C, but the methods still cannot be applied in the industry. The methods have the disadvantages and problems as follows:

1. The reduction process is comparatively complicated; in the methods disclosed by the patents, the reducing agents are mixed and fused firstly, and then the mixed and fused compound reducing agents are added or dropped into the raw material needed to reduce; and the reaction material needs to be stirred in the reaction process, and finally products should be separated out;
2. when the reduction agent is Al-Zn alloys, Zn does not participate in the reduction reaction, so that Zn needs to be separated out the purification technology is complicated, and the production cost is greatly increased; and
3. in the technical methods disclosed by the patents, the byproducts mainly $Na_3AlF_6$ and $AlF_3$ separated out from products are black or grey-black and contain a lot of titanium compounds, so that the loss of titanium is caused.

With the development of aviation and aerospace techniques and requirements for some high-temperature corrosion-resistant materials in the chemical engineering field, the development of Ti-Al alloys or Ti-Al-based high-performance alloys doped with some other metal elements is extensively concerned in various countries of the world. However, raw metals of the alloys are all produced by the method of smelting pure metal aluminum and sponge titanium which are produced by magnesiothermic reduction for $TiCl_4$, and the production technology is comparatively complicated.

### Summary of Invention

For the problems existing in the production technique of titanium, the present invention provides a method for producing titanium and titanium aluminum alloys through two-stage aluminothermic reduction and producing titanium-free cryolite as byproducts; the titanium-free cryolite containing the extremely low content of titanium can be used for electrolytic aluminum industry. The two-stage aluminothermic reduction method consists of a first-stage aluminothermic reduction process and a second-stage aluminothermic reduction process. In the first-stage aluminothermic reduction process, the titanium or the titanium aluminum alloys are the to-be-produced products, and sodium fluoride and sodium fluotitanate are used as raw materials, or sodium fluotitanate is used as raw material, and powder made of the Al-Ti alloys produced by the second-stage aluminothermic reduction process is used as reducing agent. The titanium or the titanium aluminum alloys are produced by the first-stage aluminothermic reduction. In the first-stage aluminothermic reduction process, the materials and the reducing agent participating in the reduction reaction are mixed and pressed into lumps, and the lumps are heated to 900-1300 °C under the vacuum or argon protection condition for aluminothermic reduction. Then, the reduction product is separated through vacuum distillation at the temperature of 900-1300 °C, so as to obtain titanium-containing cryolite and the titanium or the titanium aluminum alloys. In the second-stage aluminothermic reduction process, the titanium-containing cryolite produced by the first-stage aluminothermic reduction is used as a raw material, and aluminum powder is used as reducing agent. The titanium-containing cryolite and the reducing agent are mixed and pressed into lumps, and the lumps are reduced under the argon protection condition at the temperature of 900-1300 °C, so as to obtain the titanium-free cryolite and the aluminum titanium alloys. In the second-stage aluminothermic reduction process, the feeding quantity of the reducing agent follows a rule that the melting point of the aluminum titanium alloys produced alter the second-stage reduction process is lower than the temperature of the reduction reaction. In the second-stage aluminothermic reduction process, the aluminum titanium alloys and the titanium-free cryolite are mutually insoluble, so that the aluminum titanium alloy melt and the titanium-free cryolite melt can be well separated out in the molten state. the titanium in the aluminum titanium alloys produced by the second-stage aluminothermic reduction mainly exist in the form of $TiAl_3$ metallic compound, and most of $TiAl_3$ metallic compound settle at the bottom of the alloy melt in a slow cooling process, therefore, low-titanium aluminum titanium alloys with lower content of titanium are formed at the upper part, and high-titanium aluminum titanium alloys with higher content of titanium are formed at the lower part. When the second-stage reduction reaction completed and the reduction product cooled, the solid titanium-free cryolite can be separated from the aluminum titanium alloys. The aluminum titanium alloys separated out in the second-stage aluminothermic reduction process are remolten and made into powder to be used as the reducing agent of the first-stage aluminothermic reduction. The aluminum titanium alloys produced in the second-stage aluminothermic reduction can also be separated out by adopting one of the following two methods: 1, separating the low-titanium aluminum titanium alloys from the high-titanium Al-Ti alloys by a mechanical method. 2, putting the aluminum titanium alloys obtained by the second-stage aluminothermic reduction into a tiltable induction furnace for remelting, alter standing for a period of time, firstly pouring out the low-titanium aluminum titanium alloys at the upper part, and then digging out the high-titanium aluminum titanium alloys at the bottom, so that the purpose of separating the high-titanium aluminum titanium alloys from the low-titanium aluminum titanium alloys is realized. The low-titanium aluminum titanium alloys which are divided out or separated are made into powder, and the powder is used as the reducing agent of the first-stage aluminothermic reduction, and the high-titanium aluminum titanium alloys with higher content of titanium are sold as commodities.

The method provided by the present invention comprises the following steps:

1. using sodium fluotitanate as the raw material, or using sodium fluoride and sodium fluotitanate as the raw materials. when the titanium and the titanium aluminum alloys are produced and manufactured, using the aluminum titanium alloy powder produced in the second-stage aluminothermic reduction as the reducing agent. In addition, designing the proportion of all the materials according to the to-be-produced product, wherein the reaction formulas of the production proportion are shown as follows:

$$3Na_2TiF_6 + 2NaF + (3x+4)Al = 3TiAl_x + Na_3AlF_6 + Na_5Al_3F_{14}, \ 10>x>0 \ (1)$$

$$Ti + xAl = TiAl_x, \ x=0\text{-}10 \ (2);$$

or,

$$12Na_2TiF_6 + (12x+16)Al = 12TiAl_x + 3Na_3AlF_6 + 3Na_5Al_3F_{14} + 4AlF_3, \ 10>x>0 \ (3);$$

and,

$$Ti + xAl = TiAl_x, \ x=0\text{-}10 \quad (4);$$

2 uniformly mixing the raw materials with the reducing agent to obtain a mixture, pressing the mixture into lumps, placing the lumps into a vacuum reduction furnace, heating the placed lumps to 900-1300 °C under the vacuum condition or in the argon atmosphere, performing the first-stage aluminothermic reduction, and separating the reduction product by vacuum distillation at the temperature of 900-1300 °C; coagulating the titanium-containing cryolite distilled out on a crystallizer at the low-temperature end of the vacuum reduction furnace, wherein the product mainly comprises $Na_3AlF_6$, $Na_5Al_3F_{14}$, $AlF_3$ and titanium-containing sub-fluoride, the residual product which is not distilled out in the reduction furnace is the metal Ti or the titanium aluminum alloys.

Because of containing some unreacted sodium fluotitanate and titanium-containing sub-fluoride produced by a side reaction, the product distilled out after the first-stage aluminothermic reduction is black-grey, so that the product distilled out is called as the titanium-containing cryolite;

3 taking out the titanium-containing cryolite, grinding it until the particle size is less than 1.0mm, using the aluminum powder as the reducing agent, uniformly mixing the grinded titanium-containing cryolite with the aluminum powder to obtain a mixture, and pressing the mixture into lumps, wherein the feeding amount of the aluminum powder follows the rule that the melting point of the aluminum titanium alloys produced by the second-stage aluminothermic reduction is less than or equal to the temperature of the second-stage reduction reaction; placing the lumps in the reduction furnace, heating the placed lumps to 900-1300 °C in the argon atmosphere and preserving the temperature for 0.5-2h for the second-stage aluminothermic reduction, wherein when the reduction reaction completed and the temperature in the furnace reduced to normal temperature, white easily-broken titanium-free cryolite is formed at the upper parts of the product and the aluminum titanium alloys are formed at the bottom of the product, wherein the low-titanium aluminum titanium alloys with low content of titanium are formed at the upper parts of the aluminum titanium alloys, which are called as the low-titanium aluminum titanium alloys, and the aluminum titanium alloys with comparatively high content of titanium are formed at the lower parts of the aluminum titanium alloys, which are called as the high-titanium aluminum titanium alloys; and

4. remelting the aluminum titanium alloys produced by the second-stage aluminothermic reduction, making the aluminum titanium alloys into powder and returning the powder back to the first-stage aluminothermic reduction by using as the reducing agent, which are shown as in PFD 1; or, separating the low-titanium aluminum titanium alloys from the high-titanium aluminum titanium alloys by a mechanical division method, or a remelting and dumping method in the induction furnace, then making the low-titanium aluminum titanium alloys into powder as the reducing agent of the first-stage aluminothermic reduction, and selling the high-titanium aluminum titanium alloys as the commodities, which are shown in PFD 2.

In the method, when the first-stage aluminothermic reduction is performed for the first time, the metal aluminum powder is used as the reducing agent if no available aluminum titanium alloys are used as the reducing agent, and the dosage of the reducing agent in step 1 is designed according to the to-be-produced product, and the reaction formulas of the production proportion are respectively shown in (1), (2) or (3), (4).

In the method, the titanium-containing cryolite in step 2 mainly comprises $Na_3AlF_6$, $Na_5Al_3F_{14}$, $AlF_3$ and titanium-containing sub-fluoride, wherein the titanium mainly exists in the form of $Na_3TiF_6$, $TiF_3$ and a small amount of Ti. Since the content of $AlF_3$, $TiF_3$ and titanium powder are small in the mixture, they are possibly not obvious in an XRD (x-ray diffraction) analysis result of the product.

In the method, the argon condition in step 2 and step 3 refers to that the reduction furnace is vacuumized to 10Pa or below, and then argon is inflated to realize normal pressure.

In the method, the vacuum distillation refers to that distillation is performed for 1h or above under the condition that the vacuum of the reduction furnace is 10Pa or below, and the temperature is 900-1300 °C.

The method provided by the present invention is simple to operate, lower corrosion to the equipment, and high in purity of obtained cryolite, titanium and titanium aluminium alloys. The method also does not need complicated equipment. The reaction process of the method and the contents of Ti and Al in the alloys are easy to control, and the production cost is low, and the reduction rate of titanium and the utilization rate of aluminum are 100%. The byproduct namely the cryolite obtained by the method is high in purity and can be used in the aluminum electrolysis industry.

**Brief Description of Drawings**

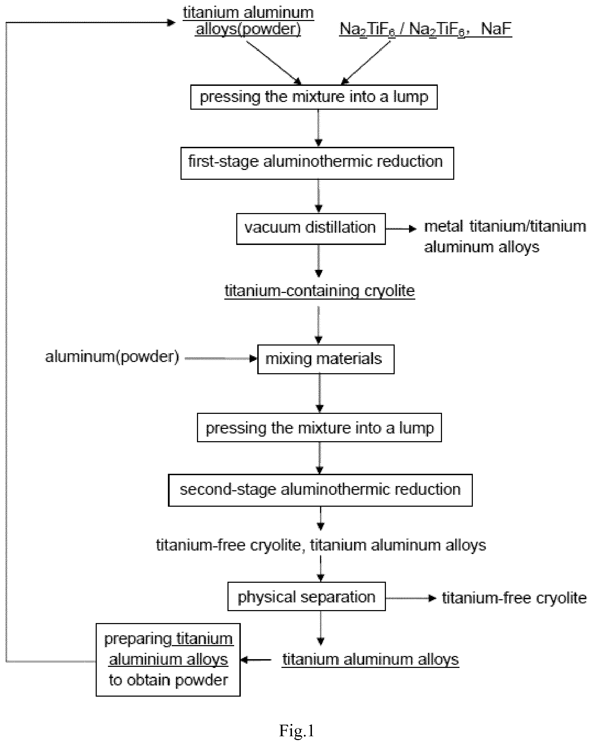

Fig. 1 is a flow diagram of the method for producing titanium or titanium aluminum alloys by two-stage aluminothermic reduction process and producing titanium-free cryolite as byproducts in the second-stage aluminothermic reduction process, wherein the aluminum titanium alloys produced in the second-stage aluminothermic reduction are remolten and then made into alloy powder, and the alloy powder is used as a reducing agent in the first-stage aluminothermic reduction process;

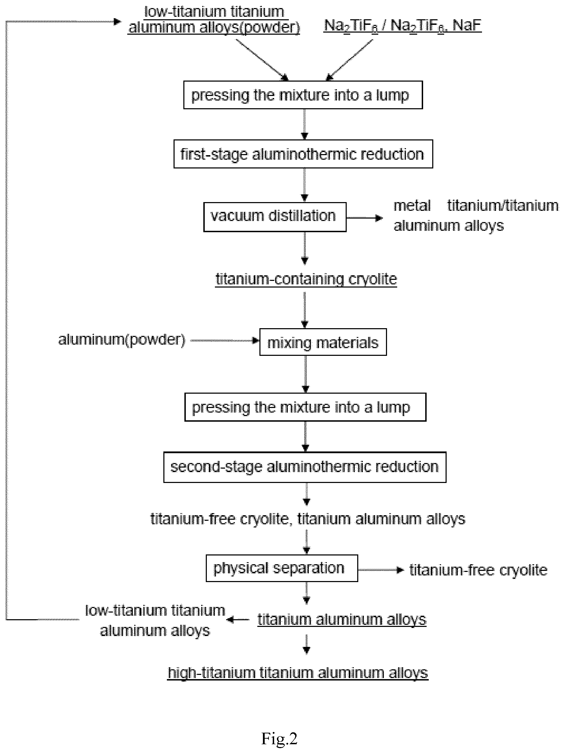

Fig. 2 is a flow diagram of the method for producing titanium or titanium aluminum alloys by two-stage aluminothermic reduction process and producing titanium-free cryolite as byproducts in the second-stage aluminothermic reduction process, wherein the aluminum titanium alloys produced in the second-stage aluminothermic reduction are divided into two parts of low-titanium aluminum titanium alloys and high-titanium aluminum titanium alloys, the high-titanium aluminum titanium alloys are sold as commodities, and the low-titanium aluminum titanium alloys are used as the reducing agent in the first-stage aluminothermic reduction process;

Fig. 3 is an XRD phase analysis diagram of a Ti3Al alloy product obtained in an embodiment 1 of the present invention;

Fig. 4 is an XRD phase analysis diagram of titanium-containing cryolite in an embodiment 1 of the present invention;

Fig. 5 is an XRD phase analysis diagram of a distillation product obtained in an embodiment 2 of the present invention;

Fig. 6 is an XRD phase analysis diagram of a $TiAl_3$ alloy product obtained in an embodiment 3 of the present invention;

Fig. 7 is an XRD phase analysis diagram of a TiAl alloy product obtained in an embodiment 5 of the present invention;

Fig. 8 is an XRD phase analysis diagram of a metal Ti product obtained in an embodiment 7 of the present invention;

Fig. 9 is an XRD phase analysis diagram of titanium-free cryolite($Na_3AlF_6$) obtained in an embodiment 9 of the present invention;

Fig. 10 is an SEM (scanning electron microscope) morphology analysis diagram of a layered interface of an aluminum titanium alloy product obtained in an embodiment 9 of the present invention; and

Fig. 11 is an EDS (energy dispersive spectrum) detection result diagram of the aluminum titanium alloy product obtained in the embodiment 9 of the present invention, wherein an upper diagram and a lower diagram respectively correspond to the position A and the position B of Fig. 10.

## Embodiments

XRD phase analysis equipment adopted in an embodiment of the present invention is an X' Pert Pro type X-ray diffractometer.

SEM morphology analysis equipment adopted in an embodiment of the present invention is an S-4800 type cold field emission scanning electron microscope.

EDS detection equipment adopted in an embodiment of the present invention is an accessory X-ray energy spectrometer of the S-4800 type scanning electron microscope. Metal aluminum powder adopted in an embodiment of the present invention is a product purchased on the market, and the purity of the metal aluminum powder is greater than or equal to 99%.

Sodium fluoride adopted in an embodiment of the present invention is a powder product purchased on the market, and the purity of the sodium fluoride is greater than or equal to 98%.

Sodium fluotitanate adopted in an embodiment of the present invention is a powder product purchased on the market, and the purity of the sodium fluotitanate is greater than or equal to 98%.

A reduction furnace adopted in an embodiment of the present invention is a vacuum reduction furnace with a crystallizer.

**Embodiment 1**

1. Sodium fluoride and sodium fluotitanate are used as raw materials, and 100g of aluminum titanium alloy powder containing 4.21wt% of titanium is used as reducing agent; when $Ti_3Al$ alloys (x=1/3 in the formula (1)) are produced, the reaction formulas of the production proportion of all the materials are shown as follows:

$$3Na_2TiF_6 + 2NaF + 5Al = Ti_3Al + Na_3AlF_6 + Na_5Al_3F_{14} \ (5)$$

and,

$$3Ti + Al = Ti_3Al \quad (6);$$

according to the chemical reaction formulas (5) and (6), it can be obtained that 100g of the reducing agent (aluminum titanium alloy powder) contains 4.21g of Ti, namely the content of $Ti_3Al$ is 5g, Al powder participating into the reduction reaction is 95g, the content of $Na_2TiF_6$ required by the reaction is 439.11g, and the content of NaF required by the reaction is 59.11g;

therefore, the actual production materials of the embodiment comprise 439.11g of $Na_2TiF_6$, 59.11g of NaF and 100g of the aluminum titanium alloy powder containing 4.21wt% of titanium;

2. the production materials are uniformly mixed and then are pressed into lumps, the lumps are placed into a vacuum reduction furnace, the reduction furnace is vacuumized to 10Pa or below, argon is inflated into the reduction furnace to realize normal pressure, and the reduction furnace is heated to 1100 °C under the argon atmosphere condition, so that a first-stage aluminothermic reduction reaction is completed; and

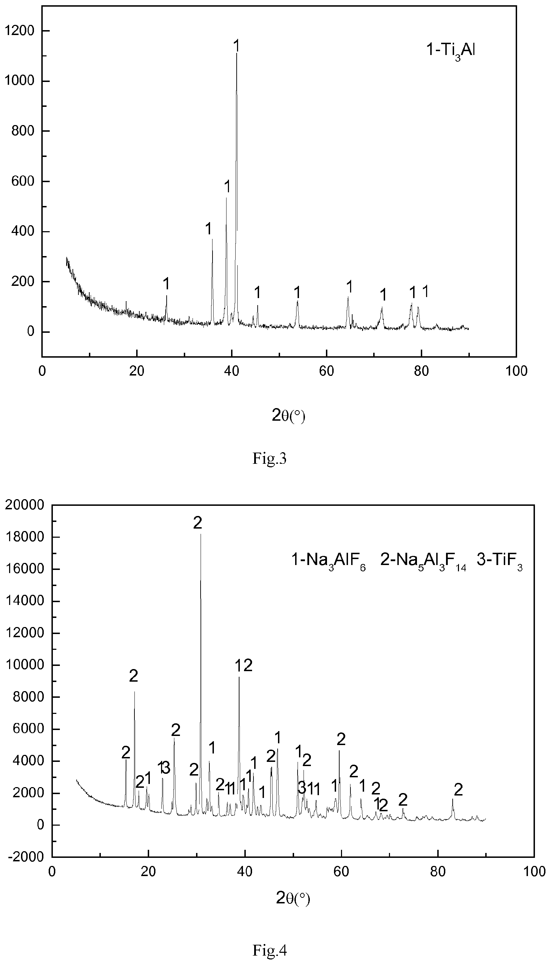

3. after the reduction reaction is ended, the reduction furnace is vacuumized to 10Pa or below, a product of the reduction reaction is distilled for 2h under the vacuum condition at the temperature of 1100 °C, a distillation product on a crystallizer at the low-temperature end in the vacuum reduction furnace is titanium-containing cryolite, and an alloy product is reserved in a reactor in a loose spongy form; an XRD phase analysis result of the alloy product is shown in Fig. 3, and an XRD phase analysis result of the titanium-containing cryolite is shown in Fig. 4.

## Embodiment 2

1. Sodium fluotitanate is used as raw materials, and 100g of titanium aluminum alloy powder containing 4.21wt% of titanium is used as reducing agent; when the produced product is $Ti_3Al$ alloys (x=1/3 in the formula (3)), the reaction formulas of the production proportion of all the materials are shown as follows:

$$12Na_2TiF_6 + 20Al = 4Ti_3Al + 3Na_3AlF_6 + 3Na_5Al3F_{14} + 4AlF_3 \quad (7)$$

and,

$$3Ti + Al = Ti_3Al \quad (8);$$

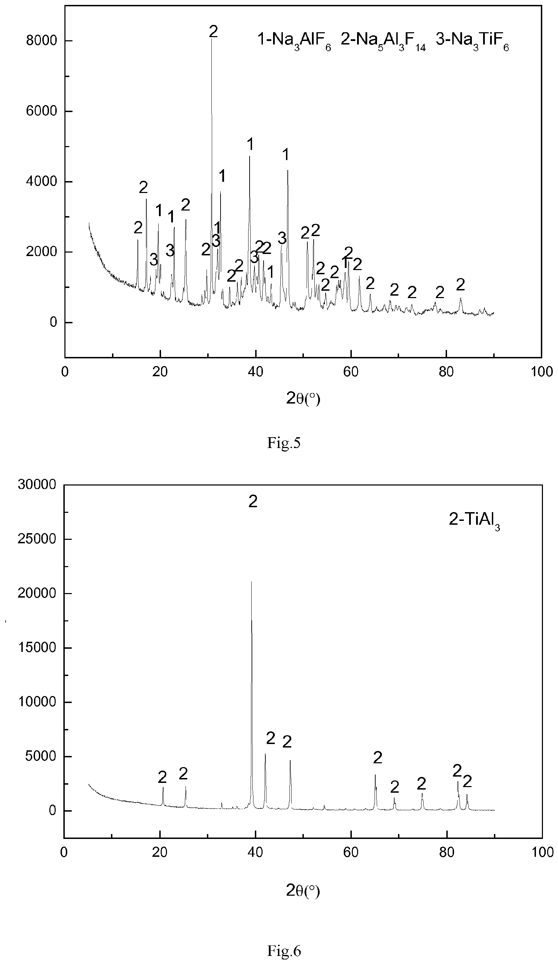

according to the chemical reaction formulas (7) and (8), it can be obtained that 100g of the reducing agent (titanium aluminum alloy powder) contains 4.21g of Ti, namely the content of $Ti_3Al$ is 5g, Al powder participating into the reduction reaction is 95g, and the content of $Na_2TiF_6$ required by the reaction is 439.11g;
therefore, the actual production materials of the embodiment comprise 439.11g of $Na_2TiF_6$ and 100g of the titanium aluminum alloy powder containing 4.21wt% of titanium;
2. the production materials are uniformly mixed and then are pressed into lumps, the lumps are placed into a vacuum reduction furnace, the reduction furnace is vacuumized to 10Pa or below, and the reduction furnace is heated to 1100 °C under the argon atmosphere condition, so that a first-stage aluminothermic reduction reaction is completed; and
3. after the reduction reaction is ended, the reduction furnace is vacuumized to 10Pa or below, a product of the reduction reaction is distilled for 2h under the vacuum condition at the temperature of 1100 °C, the distillation product on the crystallizer at the low-temperature end in the vacuum reduction furnace is a mixture of the titanium-containing cryolite and aluminium fluoride, and an alloy product is reserved in a reactor in a loose spongy form; an XRD phase analysis result of the alloys is shown in embodiment 1; and an XRD phase analysis result of the distillation product is shown in Fig. 5.

## Embodiment 3

A method in an embodiment 3 is the same as the method in the embodiment 1, but differs from it in that 100g of aluminum titanium alloy powder containing 1.86wt% of titanium is used as reducing agent for production of $TiAl_3$ alloys:

1. according to the produced product $TiAl_3$ (x=3 in the formula (1)), the reaction formulas of the production proportion of all the materials are shown as follows:

$$3Na_2TiF_6 + 2NaF + 13Al = 3TiAl_3 + Na_3AlF_6 + Na_5Al3F_{14} \quad (9)$$

and,

$$Ti + 3Al = TiAl_3 \quad (10);$$

according to the chemical reaction formulas (9) and (10), it can be obtained that 100g of the reducing agent (titanium aluminum alloy powder) contains 1.86g of Ti, namely the content of $TiAl_3$ is 5g, Al powder participating in the reduction reaction is 95g, the content of $Na_2TiF_6$ required by the reaction is 168.89g, and the mass of NaF required by the reaction is 22.74g;
therefore, the actual production materials of the embodiment 3 comprise 168.89g of $Na_2TiF_6$, 22.74g of NaF and 100g of titanium aluminum alloy powder containing 1.86wt% of titanium;

2. all the materials are heated to 1100 °C under the argon atmosphere condition, and the temperature is preserved for 2h for first-stage aluminothermic reduction; and

3. distillation is performed for 2h at the temperature of 1100 °C; after cooling, the residual metal in a reduction furnace is the $TiAl_3$ alloys, and an XRD phase analysis result of the $TiAl_3$ alloys is shown in Fig. 6.

**Embodiment 4**

A method in an embodiment 4 is the same as the method in the embodiment 2 and differs from it in that 100g of aluminum titanium alloy powder containing 1.86wt% of titanium is used as reducing agent for production of $TiAl_3$ alloys:

1. according to the produced product $TiAl_3$ (x=3 in the formula (3)), the reaction formulas of the production proportion of all the materials are shown as follows:

$$12Na_2TiF_6 + 52Al = 12\ TiAl_3 + 3Na_3AlF_6 + 3Na_5Al_3F_{14} + 4AlF_3 \qquad (11)$$

and,

$$Ti + 3Al = TiAl_3 \quad (12);$$

and therefore, it can be obtained that from the reaction equations (11) and (12) the actual production materials of the embodiment comprise 168.89 g of $Na_2TiF_6$ and 100g of aluminum titanium alloy powder containing 1.86wt% of titanium;

2. all the materials are heated to 1100 °C under the argon atmosphere condition, and the temperature is preserved for 2h for the first-stage aluminothermic reduction; and

3. distillation is performed at the temperature of 1100 °C for 2h; after cooling, the residual metal in a reduction furnace is the $TiAl_3$ alloys, and an XRD phase analysis result of the $TiAl_3$ alloys is the same as that in embodiment 3.

**Embodiment 5**

A method in an embodiment 5 is the same as the method in the embodiment 1 and differs from it in that 100g of titanium aluminum alloy powder containing 3.2wt% of titanium is used as reducing agent for production of TiAl alloys.

1. according to the produced product TiAl (x=1 in the formula (1)), the reaction formulas of the production proportion of all the materials are shown as follows:

$$3Na_2TiF_6 + 2NaF + 7Al = 3TiAl + Na_3AlF_6 + Na_5Al_3F_{14}\ (13)$$

and,

$$Ti + Al = TiAl \qquad (14);$$

according to the chemical reaction formulas (13) and (14), it can be obtained that 100g of the reducing agent (aluminum titanium alloy powder) contains 3.2g of Ti, namely the content of TiAl is 5g, Al powder participating in the reduction reaction is 95g, the content of $Na_2TiF_6$ required by the reaction is 313.65g, and the content of NaF required is 42.22g;

therefore, the actual production materials of the embodiment 5 comprise 313.65g of $Na_2TiF_6$, 42.22g of NaF and 100g of aluminum titanium alloy powder containing 3.2wt% of titanium;

2. all the materials are heated to 1100 °C under the argon atmosphere condition, and the temperature is preserved for 2h for first-stage aluminothermic reduction; and

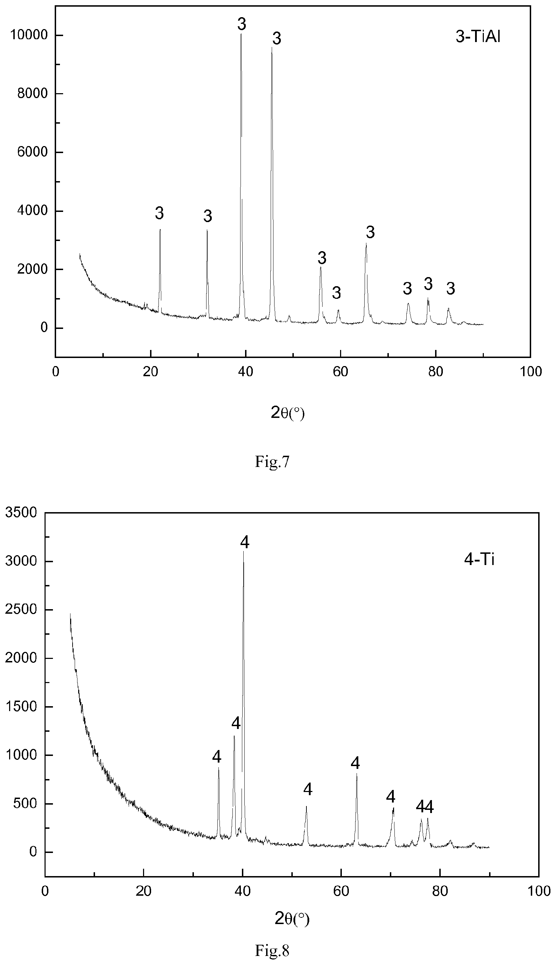

3. distillation is performed at the temperature of 1100 °C for 2h; after cooling, the residual metal in the reduction furnace is the TiAl alloys, and an XRD phase analysis result of the TiAl alloys is shown in Fig. 7.

**Embodiment 6**

A method in an embodiment 6 is the same as the method in the embodiment 2 and differs from the embodiment 2 in that 100g of aluminum titanium alloy powder containing 3.2wt% of titanium is used as reducing agent for production of TiAl alloys.

1. according to the produced product TiAl(x=1 in the formula (3)), the reaction formulas of the production proportion of all the materials are shown as follows:

$$12Na_2TiF_6 + 28Al = 12TiAl + 3Na_3AlF_6 + 3Na_5Al_3F_{14} + 4AlF_3 \quad (15)$$

and,

$$Ti + Al = TiAl \quad (16);$$

and therefore, it can be obtained that from the reaction equations (15) and (16) the actual production materials of the embodiment comprise 313.65 g of $Na_2TiF_6$ and 100g of the aluminum titanium alloy powder containing 3.2wt% of titanium;

2. all the materials are heated to 1100 °C under the argon atmosphere condition, and the temperature is preserved for 2h for first-stage aluminothermic reduction; and

3. distillation is performed at the temperature of 1100 °C for 2h; after cooling, the residual metal in a reduction furnace is the TiAl alloys, and an XRD phase analysis result of the TiAl alloys is shown in embodiment 5.

**Embodiment 7**

A method in an embodiment 7 is the same as the method in the embodiment 1 and differs from the embodiment 1 in that 100g of titanium aluminum alloy powder containing 3wt% of titanium is used as reducing agent for production of pure titanium:

1. according to the produced product Ti (x=0 in the formula (1)), the reaction formulas of the production proportion of all the materials are shown as follows:

$$3Na_2TiF_6 + 2NaF + 4Al = 3Ti + Na_3AlF_6 + Na_5Al_3F_{14} \quad (17);$$

according to the chemical reaction formula (17), it can be obtained that 100g of the reducing agent(aluminum titanium alloy powder contains 3g of Ti), Al powder participating in the reduction reaction is 97g, the content of $Na_2TiF_6$ required by the reaction is 560.44g, and the content of NaF added is 75.44g;

therefore, the actual production materials of the embodiment 7 comprise 560.44g of $Na_2TiF_6$, 75.44g of NaF and 100g of aluminum titanium alloy powder containing 3wt% of titanium;

2. all the materials are heated to 1100 °C under the argon atmosphere condition, and the temperature is preserved for 2h for first-stage aluminothermic reduction; and

3. distillation is performed at the temperature of 1100 °C for 2h; after cooling, the residual metal in the reduction furnace is the Ti, and an XRD phase analysis result of the Ti is shown in Fig. 8.

**Embodiment 8**

A method in an embodiment 8 is the same as the method in the embodiment 2 and differs from the embodiment 2 in that 100g of aluminum titanium alloy powder containing 3wt% of titanium is used as reducing agent for production of pure titanium:

1. according to the produced product Ti (x=0 in the formula (3)), the reaction formulas of the production proportion of all the materials are shown as follows:

8

$$12\ Na_2TiF_6 + 16Al = 12Ti + 3Na_3AlF_6 + 3Na_5Al_3F_{14} + 4AlF_3 \quad (18);$$

it can be obtained through the chemical reaction formula (18), the actual production materials of the embodiment comprise 560.44g of $Na_2TiF_6$ and 100g of the aluminum titanium alloy powder containing 3wt% of titanium;

2. all the materials are heated to 1100 °C under the argon atmosphere condition, and the temperature is preserved for 2h for first-stage aluminothermie reduction; and

3. distillation is performed at the temperature of 1100 °C for 2h; after cooling, the residual metal in the reduction furnace is the metal Ti, and an XRD phase analysis result of the Ti is shown in embodiment 7.

## Embodiment 9

A method in an embodiment 9 is the same as the method in the embodiment 1 and differs from the embodiment 1 in that 100g of aluminum titanium alloy powder containing 2.13wt% of titanium is used as reducing agent for production of titanium aluminum alloys containing 42.55% of titanium.

1. The titanium aluminum alloys containing 42.55wt% of titanium are the same as the product $TiAl_{2.4}$ alloys (x=2.4 in the formula (1)), and therefore, the reaction formulas of the production proportion of all the materials in the embodiment 9 are shown as follows:

$$3\ Na_2TiF_6 + 2NaF + 11.2Al = 3TiAl_{2.4} + Na_3AlF_6 + Na_5Al_3F_{14}\ (19)$$

And

$$Ti + 2.4Al = TiAl_{2.4}\ (20)$$

according to the chemical reaction formulas (19) and (20), it can be obtained that 100g of the reducing agent (aluminum titanium alloy powder) contains 2.13g of Ti, namely the content of $TiAl_{2.4}$ is 5g, Al powder participating in the reduction reaction is 95g, the content of $Na_2TiF_6$ required by the reaction is 196.03g, and the mass of NaF added is 26.39g;

therefore, the actual production materials of the embodiment 9 comprise 196.03g of Na2TiF6, 26.39g of NaF and 100g of aluminum titanium alloy powder containing 2.1 3wt% of titanium;

2. ail the materials are heated to 1100 °C under the argon atmosphere condition, and the temperature is preserved for 2h for first-stage aluminothermic reduction; and

3. distillation is performed for 2h at the temperature of 1100 °C; after cooling, the residual metal in a reduction furnace is the $TiAl_{2.4}$ alloys, and an chemical component analysis result of the $TiAl_{2.4}$ alloys is shown in Table 1.

Table 1

| Chemical components | Al | Ti | Ca | Si | Fe |
|---|---|---|---|---|---|
| Percentage by mass(%) | 57.4963 | 42.0368 | 0.0537 | 0.0152 | 0.0044 |

## Embodiment 10

Titanium-free cryolite and aluminum titanium alloys are produced through vacuum reduction by using the titanium-containing cryolite distilled out through the first-stage aluminothermic reduction in the embodiment 7 as a raw material and aluminum powder as reducing agent.

1. after the first-stage aluminothermic reduction process, 427.78g of the titanium-containing cryolite is grinded until the particle size is lower than 1.0mm, wherein the content of titanium is 12.84g; 100g of aluminum powder is used as reducing agent; the grinded titanium-containing cryolite and the aluminum powder are uniformly mixed and then are pressed into lumps; the lumps are placed into the vacuum reduction furnace, the vacuum reduction furnace is vacuumized to 10Pa or below, argon is inflated into the vacuum reduction furnace to normal pressure, the lumps are heated to 1200 DEG C under the argon atmosphere condition, and the temperature is preserved for 2h for the second-stage aluminothermic reduction; and

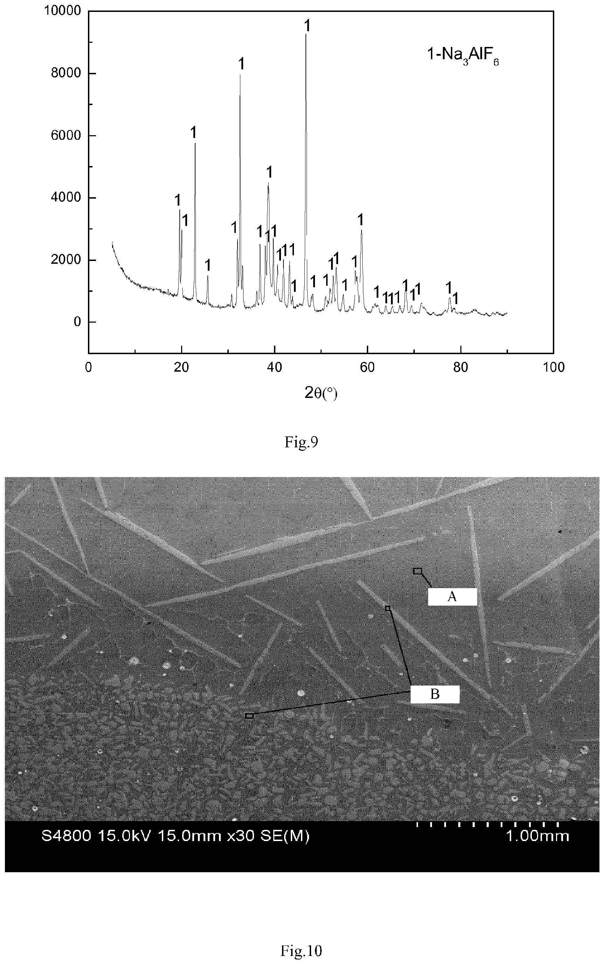

2. after the materials in the reduction furnace are cooled to normal temperature, a product is taken out and separated out, so as to obtain the white titanium-free cryolite and the aluminum titanium alloys with the forming amounts of 414.94g and 112.84g respectively in theory; the aluminum titanium alloys can be used as reducing agent for the next first-stage aluminothermic reduction process to produce metal titanium, and the cycle continues; an XRD phase analysis result of the white titanium-free cryolite is shown in Fig. 9, and an XRF component analysis result is listed in Table 2;

Table 2

| Chemical components | F | Na | Al | Mg | Ca | Si | Fe | K | Ti |
|---|---|---|---|---|---|---|---|---|---|
| Percentage by mass(%) | 59.8487 | 22.7601 | 16.6017 | 0.7133 | 0.0254 | 0.0177 | 0.0058 | 0.0043 | <0.001 |

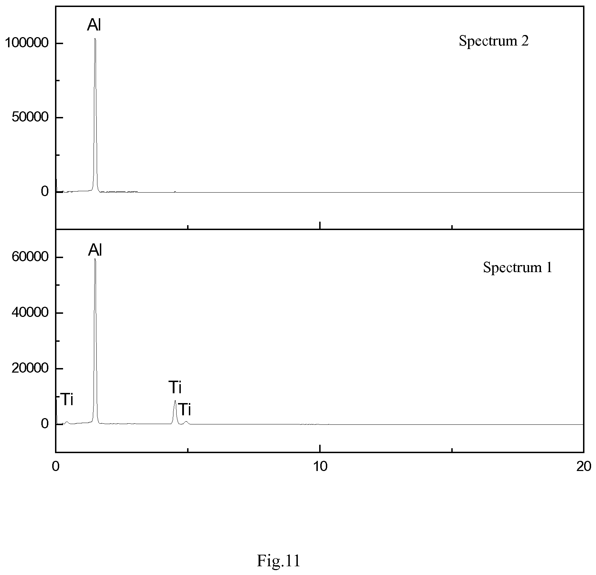

It can be seen from Table 2 that the cryolite produced in the embodiment 10 completely conforms with the national standard GB/T 4291-1999 'cryolite' and can be directly applied in the aluminum electrolysis industry. Low-titanium aluminum titanium alloys are formed at the upper layer of the aluminum titanium alloy product, and high-titanium aluminum titanium alloys are formed at the lower layer of the aluminum titanium alloy product. An SEM image and an energy spectrum analysis result of the aluminum titanium alloy product are respectively shown in Fig. 10 and Fig. 11.

The titanium-containing cryolite obtained in the first-stage aluminothermic reduction of the embodiments 1-9 can be further treated by the method shown in the embodiment 10, the aluminum powder is adopted for performing the second-stage vacuum aluminothermic reduction, the obtained white titanium-free cryolite can be applied in the aluminum electrolysis industry, and the aluminum titanium alloys can fully returns to the next first-stage aluminothermic reduction process as the reducing agent.

## Claims

1.    A method for producing titanium or titanium aluminum alloys through two-stage aluminothermic reduction and obtaining titanium-free cryolite as byproducts, **characterized by** comprising the following steps:

(1) using sodium fluotitanate as raw material, and using aluminum titanium alloy powder obtained through second-stage aluminothermic reduction as a reducing agent, wherein the reaction formulas of the production proportion of all the materials are shown as follows:

$$12\,Na_2TiF_6 + (12x+16)Al = 12TiAl_x + 3Na_3AlF_6 + 3Na_5Al_3F_{14} + 4AlF_3\ (1)$$

and,

$$Ti + xAl = TiAl_x\qquad (2);$$

wherein x=0-10;

(2) uniformly mixing the raw materials with the reducing agent to obtain a mixture, pressing the mixture into lumps, placing the lumps into a vacuum reduction furnace, heating the placed lumps to 900-1300 °C under the vacuum condition or in the argon atmosphere, and performing the first-stage aluminothermic reduction and vacuum distillation; coagulating a titanium-containing cryolite distilled out on a crystallizer at the low-temperature end of the vacuum reduction furnace, wherein the product mainly comprises $Na_3AlF_6$, $Na_5Al_3F_{14}$, $AlF_3$ and titanium-containing sub-fluoride, and the residual product in the reduction furnace is $TiAl_x$;

(3) taking out the titanium-containing cryolite, grinding the titanium-containing cryolite until the particle size is lower than 1.0mm, using the aluminum powder as the reducing agent, uniformly mixing the grinded titanium-containing cryolite with the aluminum powder to obtain a mixture, and pressing the mixture into lumps, wherein the feeding amount of the aluminum powder follows the rule that the melting point of the Al-Ti alloys produced by the second-stage aluminothermic reduction is lower than or equal to the temperature of the second-stage aluminothermic reduction temperature; placing the lumps into the reduction furnace, heating the placed lumps to 900-1300 °C in the argon atmosphere and preserving the temperature for 0.5-2h for the second-stage aluminothermic reduction, wherein according to the products obtained alter the reduction reaction is ended and the temperature in the furnace body is reduced to normal temperature, white titanium-free cryolite is formed at the upper parts of the products and the aluminum titanium alloys are formed at the bottoms of the products, wherein alloys with low content of titanium are formed at the upper parts of the aluminum titanium alloys, which are called as the low-titanium titanium aluminum alloys; the aluminum titanium alloys with comparatively high content of titanium is formed at the lower parts of the aluminum titanium alloys, which are called as the high-titanium aluminum titanium alloys; and (4) dividing or separating the low-titanium aluminum titanium alloys and the high-titanium aluminum titanium alloys with a mechanical division method or a remelting and dumping method of the induction furnace, making the low-titanium aluminum titanium alloys divided out or separated out into powder as the reducing agent of the first-stage aluminothermic reduction, or remelting the aluminum titanium alloy produced by the second-stage aluminothermic reduction to make powder, and returning the powder back to the first-stage aluminothermic reduction as the reducing agent for use.

2. The method for producing titanium or titanium aluminum alloys through two-stage aluminothermic reduction and obtaining titanium-free cryolite as byproducts, **characterized by** comprising the following steps:

(1) using sodium fluoride and sodium fluotitanate as raw materials, and using aluminum titanium alloy powder obtained through second-stage aluminothermic reduction as a reducing agent, wherein the reaction formulas of the production proportion of all the materials are shown as follows:

$$3Na_2TiF_6 + 2NaF + (3x+4)Al = 3TiAl_x + Na_3AlF_6 + Na_5Al_3F_{14} \ (3)$$

and,

$$Ti + xAl = TiAl_x \qquad (4);$$

wherein x=0-10;
(2) uniformly mixing the raw materials with the reducing agent to obtain a mixture, pressing the mixture into lumps, placing the lumps into a vacuum reduction furnace, heating the placed lumps to 900-1300 °C under the vacuum condition or in the argon atmosphere, and performing the first-stage aluminothermic reduction and vacuum distillation; coagulating titanium-containing cryolite distilled out on a crystallizer at the low-temperature end of the vacuum reduction furnace, wherein the product comprises the main components of a mixture of $Na_3AlF_6$, $Na_5Al_3F_{14}$, $AlF_3$ and titanium-containing sub-fluoride, the residual product in the reduction furnace is $TiAl_x$;
(3) taking out the titanium-containing cryolite, grinding the titanium-containing cryolite until the particle size is lower than 1.0mm, using the aluminum powder as the reducing agent, uniformly mixing the grinded titanium-containing cryolite with the aluminum powder to obtain a mixture, and pressing the mixture into lumps, wherein the feeding amount of the aluminum powder follows the rule that the melting point of the Al-Ti alloys produced by the second-stage aluminothermie reduction is less than or equal to the temperature of the second-stage aluminothermie reduction; placing the lumps in the reduction furnace, heating the placed lumps to 900-1300 °C in the argon atmosphere and preserving the temperature for 0.5-2h for the second-stage aluminothermie reduction, wherein according to the products obtained after the reduction reaction is ended and the temperature in the furnace body is reduced to normal temperature, white titanium-free cryolite is formed at the upper parts of the products and the aluminum titanium alloys are formed at the bottoms of the products, wherein the low-titanium aluminum titanium alloys are formed at the upper parts of the aluminum titanium alloys, which are called as the low-titanium aluminum titanium alloys; the aluminum titanium alloys with comparatively high content of titanium are formed at the lower parts of the aluminum titanium alloys, which are called as the high-titanium titanium aluminum alloys; and
(4) dividing or separating the low-titanium aluminum titanium alloys and the high-titanium aluminum titanium alloys with a mechanical division method or a remelting and dumping method of the induction furnace, making the low-titanium aluminum titanium alloys divided out or separated out into powder as the reducing agent of the first-stage aluminothermie reduction, or remelting the aluminum titanium alloys produced by the second-stage aluminothermie reduction to make powder, and returning the powder back to the first-stage aluminothermie reduction as the reducing agent for use.

3. The method for producing titanium or titanium aluminum alloys through two-stage aluminothermic reduction and obtaining titanium-free cryolite as byproducts, according to claim 1 or 2, **characterized in that** when the first-stage aluminothermic reduction is performed for the first time, metal aluminum powder is used as a reducing agent, and the production proportion of the using dosage of the reducing agent is shown in the reaction formula in step (1).

4. The method for producing titanium or titanium aluminum alloys through two-stage aluminothermic reduction and obtaining titanium-free cryolite as byproducts, according to claim 1 or 2, **characterized in that** the vacuum distillation lies **in that** the reduction furnace is vacuumized to 10Pa or below, and distillation is performed for 1h or above under the condition that the temperature is 900-1300 °C.

## Patentansprüche

1. Verfahren zum Herstellen von Titan oder Titanaluminiumlegierungen durch zweistufige aluminothermische Reduktion und Erhalten von titanfreiem Kryolith als Nebenprodukte, **dadurch gekennzeichnet, dass** es die folgenden Schritte umfasst:

(1) Verwenden von Natriumfluotitanat als Rohmaterial und Verwenden von Aluminiumtitanlegierungspulver, das durch zweitstufige aluminothermische Reduktion erhalten wurde, als Reduktionsmittel, wobei die Reaktionsformeln des Herstellungsanteils aller Materialien wie folgt gezeigt sind:

$$12\ Na_2TiF_6 + (12x + 16)Al = 12TiAl_x + 3Na_3AlF_6 + 3Na_5Al_3F_{14} + 4AlF_3\ (1)$$

und

$$Ti + xAl = TiAl_x \qquad\qquad (2);$$

wobei x = 0 bis 10;
(2) gleichmäßiges Mischen der Rohmaterialien mit dem Reduktionsmittel, um eine Mischung zu erhalten, Pressen der Mischung in Klumpen, Platzieren der Klumpen in einem Vakuumreduktionsofen, Erhitzen der platzierten Klumpen auf 900 bis 1300 °C unter der Vakuumbedingung oder unter der Argonatmosphäre und Durchführen der erststufigen aluminothermischen Reduktion und Vakuumdestillation; Koagulieren eines titanhaltigen Kryoliths, der herausdestilliert wurde, auf einem Kristallisator, am Niedrigtemperaturende des Vakuumreduktionsofens, wobei das Produkt vorwiegend $Na_3AlF_6$, $Na_5Al_3F_{14}$, $AlF_3$ und titanhaltiges Subfluorid umfasst und das Restprodukt im Reduktionsofen $TiAl_x$ ist;
(3) Entnehmen des titanhaltigen Kryoliths, Mahlen des titanhaltigen Kryoliths, bis die Partikelgröße kleiner als 1,0 mm ist, Verwenden des Aluminiumpulvers als Reduktionsmittel, gleichmäßiges Mischen des gemahlenen titanhaltigen Kryoliths mit dem Aluminiumpulver, um eine Mischung zu erhalten, und Pressen der Mischung in Klumpen, wobei die Zuführmenge des Aluminiumpulvers der Regel folgt, dass der Schmelzpunkt der Al-Ti-Legierungen, die mit der zweistufigen aluminothermischen Reduktion hergestellt werden, geringer als die Temperatur der Temperatur der zweitstufigen aluminothermischen Reduktion oder gleich dieser ist; Platzieren der Klumpen im Reduktionsofen, Erhitzen der platzierten Klumpen auf 900 bis 1300 °C unter der Argonatmosphäre und Halten der Temperatur für 0,5 bis 2 h für die zweitstufige aluminothermische Reduktion, wobei gemäß den erhaltenen Produkten Ändern der Reduktionsreaktion beendet wird und die Temperatur im Ofenkörper auf Normaltemperatur verringert wird, weißer titanfreier Kryolith auf den oberen Teilen der Produkte gebildet wird und die Aluminiumtitanlegierungen auf den Böden der Produkte gebildet werden, wobei Legierungen mit geringem Titangehalt auf den oberen Teilen der Aluminiumtitanlegierungen gebildet werden, die Titanaluminiumlegierungen mit geringem Titangehalt genannt werden; die Aluminiumtitanlegierungen mit vergleichsweise hohem Titangehalt auf den unteren Teilen der Aluminiumtitanlegierungen gebildet werden, die Aluminiumtitanlegierungen mit hohem Titangehalt genannt werden; und (4) Teilen oder Trennen der Aluminiumtitanlegierungen mit geringem Titangehalt und der Aluminiumtitanlegierungen mit hohem Titangehalt unter Verwendung eines mechanischen Teilungsverfahrens oder eines Erneutes-Schmelzen- und Abladeverfahrens des Induktionsofens, Bilden der sich herausgeteilten oder herausgetrennten Aluminiumtitanlegierungen mit geringem Titangehalt zu einem Pulver als Reduktionsmittel der erststufigen aluminothermischen Reduktion oder erneutes Schmelzen der Aluminiumtitanlegierung, die durch die zweitstufige aluminothermische Reduktion hergestellt wurde, um Pulver herzustellen, und Rückführen des Pulvers zurück in die erststufige aluminothermische Reduktion als Reduktionsmittel zur Verwendung.

2. Verfahren zum Herstellen von Titan oder Titanaluminiumlegierungen durch zweistufige aluminothermische Reduktion und Erhalten von titanfreienm Kryolith als Nebenprodukte, **dadurch gekennzeichnet, dass** es die folgenden Schritte umfasst:

(1) Verwenden von Natriumfluorid und Natriumfluotitanat als Rohmaterialien und Verwenden von Aluminiumtitanlegierungspulver, das durch zweitstufige aluminothermische Reduktion erhalten wurde, als Reduktionsmittel, wobei die Reaktionsformeln des Herstellungsanteils aller Materialien wie folgt gezeigt sind:

$$3Na_2TiF_6 + 2NaF + (3x +4)Al = 3TiAl_x + Na_3AlF_6 + Na_5Al_3F_{14} \quad (3)$$

und

$$Ti + xAl = TiAl_x \qquad (4);$$

wobei x = 0 bis 10;
(2) gleichmäßiges Mischen der Rohmaterialien mit dem Reduktionsmittel, um eine Mischung zu erhalten, Pressen der Mischung in Klumpen, Platzieren der Klumpen in einem Vakuumreduktionsofen, Erhitzen der platzierten Klumpen auf 900 bis 1300 °C unter der Vakuumbedingung oder unter der Argonatmosphäre und Durchführen der erststufigen aluminothermischen Reduktion und Vakuumdestillation; Koagulieren eines titanhaltigen Kryoliths, der herausdestilliert wurde, auf einem Kristallisator, am Niedrigtemperaturende des Vakuumreduktionsofens, wobei das Produkt die Hauptkomponenten einer Mischung von $Na_3AlF_6$, $Na_5A1_3F_{14}$, $AlF_3$ und titanhaltigem Subfluorid umfasst, das Restprodukt im Reduktionsofen $TiAl_x$ ist;
(3) Entnehmen des titanhaltigen Kryoliths, Mahlen des titanhaltigen Kryoliths, bis die Partikelgröße kleiner als 1,0 mm ist, Verwenden des Aluminiumpulvers als Reduktionsmittel, gleichmäßiges Mischen des gemahlenen titanhaltigen Kryoliths mit dem Aluminiumpulver, um eine Mischung zu erhalten, und Pressen der Mischung in Klumpen, wobei die Zuführmenge des Aluminiumpulvers der Regel folgt, dass der Schmelzpunkt der Al-Ti-Legierungen, die mit der zweitstufigen aluminothermischen Reduktion hergestellt werden, geringer als die Temperatur der zweitstufigen aluminothermischen Reduktion oder gleich dieser ist; Platzieren der Klumpen im Reduktionsofen, Erhitzen der platzierten Klumpen auf 900 bis 1300 °C unter der Argonatmosphäre und Halten der Temperatur für 0,5 bis 2 h für die zweitstufige aluminothermische Reduktion, wobei gemäß den erhaltenen Produkten, nachdem die Reduktionsreaktion beendet wurde und die Temperatur im Ofenkörper auf Normaltemperatur verringert wurde, weißer titanfreier Kryolith auf den oberen Teilen der Produkte gebildet wird und die Aluminiumtitanlegierungen auf den Böden der Produkte gebildet werden, wobei die Aluminiumtitanlegierungen mit geringem Titangehalt auf den oberen Teilen der Aluminiumtitanlegierungen gebildet werden, die Aluminiumtitanlegierungen mit geringem Titangehalt genannt werden; die Aluminiumtitanlegierungen mit vergleichsweise hohem Titangehalt auf den unteren Teilen der Aluminiumtitanlegierungen gebildet werden, die Titanaluminiumlegierungen mit hohem Titangehalt genannt werden; und
(4) Teilen oder Trennen der Aluminiumtitanlegierungen mit geringem Titangehalt und der Aluminiumtitanlegierungen mit hohem Titangehalt unter Verwendung eines mechanischen Teilungsverfahrens oder eines Erneutes-Schmelzen- und Abladeverfahrens des Induktionsofens, Bilden der sich herausgeteilten oder herausgetrennten Aluminiumtitanlegierungen mit geringem Titangehalt zu einem Pulver als Reduktionsmittel der erststufigen aluminothermischen Reduktion oder erneutes Schmelzen der Aluminiumtitanlegierungen, die durch die zweitstufige aluminothermische Reduktion hergestellt wurden, um Pulver herzustellen, und Rückführen des Pulvers zurück in die erststufige aluminothermische Reduktion als Reduktionsmittel zur Verwendung..

3. Verfahren zum Herstellen von Titan oder Titanaluminiumlegierungen durch zweistufige aluminothermische Reduktion und Erhalten von titanfreiem Kryolith als Nebenprodukte nach Anspruch 1 oder 2, **dadurch gekennzeichnet, dass** ein Metallaluminiumpulver, wenn die erststufige aluminothermische Reduktion zum ersten Mal durchgeführt wird, als Reduktionsmittel verwendet wird und der Herstellungsanteil der Anwendungsdosis des Reduktionsmittels in der Reaktionsformel von Schritt (1) gezeigt ist.

**4.** Verfahren zum Herstellen von Titan oder Titanaluminiumlegierungen durch zweistufige aluminothermische Reduktion und Erhalten von titanfreiem Kryolith als Nebenprodukte nach Anspruch 1 oder 2, **dadurch gekennzeichnet, dass** die Vakuumdestillation darin besteht, dass der Reduktionsofen auf 10 Pa oder weniger vakuumiert wird und die Destillation für 1 h oder mehr unter der Bedingung durchgeführt wird, dass die Temperatur 900 bis 1300 °C beträgt.

## Revendications

**1.** Procédé de production de titane ou d'alliages de titane et d'aluminium par réduction aluminothermique en deux étapes et d'obtention de cryolite sans titane comme sous-produits, **caractérisé en ce qu'**il comprend les étapes suivantes :

(1) utilisation de fluorotitanate de sodium comme matière première, et utilisation de poudre d'alliage aluminium-titane obtenue par réduction aluminothermique de seconde étape comme réducteur, les formules de réaction de la proportion de production de tous les matériaux étant figurées comme suit :

$$12 \ Na_2TiF_6 + (12x+16) \ Al =$$
$$12 \ TiAl_x + 3 \ Na_3AlF_6 + 3 \ Na_5Al_3F_{14} + 4 \ AlF_3 \ (1)$$

et

$$Ti + x \ Al = TiAl_x \ (2) \ ;$$

où x = 0 à 10 ;

(2) mélange uniforme des matières premières avec le réducteur pour obtenir un mélange, pressage du mélange pour en faire des morceaux, placement des morceaux dans un four de réduction sous vide, chauffage des morceaux chauffés entre 900 et 1300°C dans les conditions de vide ou sous atmosphère d'argon, et réalisation de la réduction aluminothermique de première étape et distillation sous vide ; coagulation d'une cryolite contenant du titane extraite par distillation sur un cristalliseur à l'extrémité de basse température du four de réduction sous vide, le produit contenant principalement $Na_3AlF_6$, $Na_5Al_3F_{14}$, 4 $AlF_3$ et un sous-fluorure contenant du titane, et le produit résiduel dans le four de réduction étant $TiAl_x$ ;

(3) extraction de la cryolite contenant du titane, broyage de la cryolite contenant du titane jusqu'à ce que sa taille de particules soit inférieure à 1,0 mm en utilisant la poudre d'aluminium comme réducteur, mélange uniforme de la cryolite contenant du titane avec la poudre d'aluminium pour obtenir un mélange et pressage du mélange pour en faire des morceaux, la quantité d'alimentation en poudre d'aluminium suivant la règle comme quoi le point de fusion des alliages Al-Ti produits par la réduction aluminothermique de seconde étape est inférieur ou égal à la température de la réduction aluminothermique de seconde étape ; placement des morceaux dans le four de réduction sous vide, chauffage des morceaux chauffés entre 900 et 1300°C sous l'atmosphère d'argon et maintien de la température pendant 0,5 à 2 h pour la réduction aluminothermique de seconde étape, où en fonction des produits obtenus après la fin de la réaction de réduction et après que la température dans le corps de four est retombée à température normale, de la cryolite blanche sans titane est formée dans les parties supérieures du produit et les alliages d'aluminium et de titane sont formés au fond des produits, des alliages à faible teneur en titane se formant dans les parties supérieures des alliages d'aluminium et de titane, qu'on appelle alliages d'aluminium et de titane à faible teneur en titane, les alliages à comparativement forte teneur en titane se formant dans les parties inférieures des alliages d'aluminium et de titane, qu'on appelle alliages d'aluminium et de titane à forte teneur en titane ; et

(4) division ou séparation des alliages à faible teneur en titane et des alliages à forte teneur en titane par un procédé de division mécanique ou un procédé de refusion et décrassage du four à induction, divisant ou séparant les alliages à faible teneur en titane sous forme de poudre comme réducteur de la réduction aluminothermique de premier étape, ou refondant l'alliage d'aluminium et de titane produit par la réduction aluminothermique de seconde étape pour produire de la poudre et en renvoyant la poudre à la réduction aluminothermique de première étape pour utilisation comme réducteur.

**2.** Procédé de production de titane ou d'alliages de titane et d'aluminium par réduction aluminothermique en deux étapes et d'obtention de cryolite sans titane comme sous-produits, **caractérisé en ce qu'**il comprend les étapes suivantes :

(1) utilisation de fluorure de sodium et de fluorotitanate de sodium comme matière première et utilisation de poudre d'alliage d'aluminium et de titane obtenue par réduction aluminothermique de seconde étape comme réducteur, les formules de réaction de la proportion de production de tous les matériaux étant figurées comme suit :

$$3 \ Na_2TiF_6 + 2 \ NaF + (3x+4) \ Al =$$

$$3 \ TiAl_x + Na_3AlF_6 + Na_5Al_3F_{14} \ (3)$$

et

$$Ti + x \ Al = TiAl_x \ (4) \ ;$$

où x = 0 à 10 ;

(2) mélange uniforme des matières premières avec le réducteur pour obtenir un mélange, pressage du mélange pour en faire des morceaux, placement des morceaux dans un four de réduction sous vide, chauffage des morceaux chauffés entre 900 et 1300°C dans les conditions de vide ou sous atmosphère d'argon, et réalisation de la réduction aluminothermique de première étape et distillation sous vide ; coagulation d'une cryolite contenant du titane extraite par distillation sur un cristalliseur à l'extrémité de basse température du four de réduction sous vide, le produit contenant principalement $Na_3AlF_6$, $Na_5Al_3F_{14}$, 4 $AlF_3$ et un sous-fluorure contenant du titane, et le produit résiduel dans le four de réduction étant $TiAl_x$ ;

(3) extraction de la cryolite contenant du titane, broyage de la cryolite contenant du titane jusqu'à ce que sa taille de particules soit inférieure à 1,0 mm en utilisant la poudre d'aluminium comme réducteur, mélange uniforme de la cryolite contenant du titane avec la poudre d'aluminium pour obtenir un mélange et pressage du mélange pour en faire des morceaux, la quantité d'alimentation en poudre d'aluminium suivant la règle comme quoi le point de fusion des alliages Al-Ti produits par la réduction aluminothermique de seconde étape est inférieur ou égal à la température de la réduction aluminothermique de seconde étape ; placement des morceaux dans le four de réduction sous vide, chauffage des morceaux chauffés entre 900 et 1300°C sous l'atmosphère d'argon et maintien de la température pendant 0,5 à 2 h pour la réduction aluminothermique de seconde étape, où en fonction des produits obtenus après la fin de la réaction de réduction et après que la température dans le corps de four est retombée à température normale, de la cryolite blanche sans titane est formée dans les parties supérieures du produit et les alliages d'aluminium et de titane sont formés au fond des produits, des alliages à faible teneur en titane se formant dans les parties supérieures des alliages d'aluminium et de titane, qu'on appelle alliages d'aluminium et de titane à faible teneur en titane, les alliages à comparativement forte teneur en titane se formant dans les parties inférieures des alliages d'aluminium et de titane, qu'on appelle alliages d'aluminium et de titane à forte teneur en titane ; et

(4) division ou séparation des alliages à faible teneur en titane et des alliages à forte teneur en titane par un procédé de division mécanique ou un procédé de refusion et décrassage du four à induction, divisant ou séparant les alliages à faible teneur en titane sous forme de poudre comme réducteur de la réduction aluminothermique de premier étape, ou refondant l'alliage d'aluminium et de titane produit par la réduction aluminothermique de seconde étape pour produire de la poudre et en renvoyant la poudre à la réduction aluminothermique de première étape pour utilisation comme réducteur.

3. Procédé de production de titane ou d'alliages de titane et d'aluminium par réduction aluminothermique en deux étapes et d'obtention de cryolite sans titane comme sous-produits selon la revendication 1 ou 2, **caractérisé en ce que** lorsque la réduction aluminothermique de première étape est effectuée pour la première fois, on utilise de la poudre d'aluminium métallique comme réducteur, et la proportion de production du dosage d'utilisation du réducteur est indiquée par la formule réactionnelle de l'étape (1).

4. Procédé de production de titane ou d'alliages de titane et d'aluminium par réduction aluminothermique en deux étapes et d'obtention de cryolite sans titane comme sous-produits selon la revendication 1 ou 2, **caractérisé en ce que** la distillation sous vide consiste **en ce que** le four de réduction est porté sous vide à 10 Pa ou moins, et une distillation est effectuée pendant 1 h ou plus dans des conditions de température de 900 à 1300°C.

titanium aluminum
alloys(powder)          $Na_2TiF_6$ / $Na_2TiF_6$，NaF

pressing the mixture into a lump

first-stage aluminothermic reduction

vacuum distillation → metal titanium/titanium
aluminum alloys

titanium-containing cryolite

aluminum(powder) → mixing materials

pressing the mixture into a lump

second-stage aluminothermic reduction

titanium-free cryolite, titanium aluminum alloys

physical separation → titanium-free cryolite

preparing titanium
aluminium alloys    ← titanium aluminum alloys
to obtain powder

Fig.1

low-titanium titanium
aluminum alloys(powder)      $Na_2TiF_8$ / $Na_2TiF_8$, NaF

pressing the mixture into a lump

first-stage aluminothermic reduction

vacuum distillation → metal titanium/titanium aluminum alloys

titanium-containing cryolite

aluminum(powder) → mixing materials

pressing the mixture into a lump

second-stage aluminothermic reduction

titanium-free cryolite, titanium aluminum alloys

physical separation → titanium-free cryolite

low-titanium titanium ← titanium aluminum alloys
aluminum alloys

high-titanium titanium aluminum alloys

Fig.2

Fig.3

Fig.4

Fig.5

Fig.6

Fig.7

Fig.8

Fig.9

S4800 15.0kV 15.0mm x30 SE(M)    1.00mm

Fig.10

Fig.11

**EP 3 327 154 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100173170 A1
- CN 102534263 A
- CN 102560153 A
- CN 102534260 A
- US 4668286 A
- US 5397375 A
- CN 102936672